Europäisches Patentamt

European Patent Office

Office européen des brevets

(11) Publication number: 0 568 008 A1

# EUROPEAN PATENT APPLICATION

(21) Application number: 93106809.2

(22) Date of filing: 27.04.93

(51) Int. Cl.5: C08J 7/04, //C08L67/02, G11B5/704

(30) Priority: 30.04.92 JP 111824/92
30.04.92 JP 111825/92
16.06.92 JP 156996/92

(43) Date of publication of application:
03.11.93 Bulletin 93/44

(84) Designated Contracting States:
DE FR GB IT LU NL

(71) Applicant: DIAFOIL HOECHST CO., LTD
28-10, Hongo 1-chome
Bunkyo-ku Tokyo(JP)

(72) Inventor: Kinoshira, Shin-Ichi
2-10-4, Ogawa
Machida-shi, Tokyo(JP)
Inventor: Otani, Yuzo
4-6-14, Tsurumaki,
Setagaya-ku
Machida-shi, Tokyo(JP)
Inventor: Fujita, Masato
Popuragaoka Kopu, 15-306,
2-13-2, Naruse
Machida-shi, Tokyo(JP)

(74) Representative: TER MEER - MÜLLER - STEINMEISTER & PARTNER
Mauerkircherstrasse 45
D-81679 München (DE)

(54) Laminated polyethylene 2,6-naphthalate film.

(57) A laminated polyethylene 2,6-naphthalate film having a polyethylene 2,6-naphthalate film and a coating layer which is formed on at least one surface of the polyethylene 2,6-naphthalate film and comprises at least one water-soluble or dispersible resin selected from the group consisting of polyesters, polyurethanes and polyacrylic resins, and satisfying the following properties: (1) an $F_5$ value in a machine direction of at least 1.5 x $10^8$ Pa, (2) a Young's modulus in a machine direction of at least 5.9 x $10^9$ Pa, (3) a Young's modulus in a transverse direction of at least 5.9 x $10^9$ Pa, and (4) a surface roughness Ra of the coating layer of not larger than 0.020 μm, which laminated film is suitable as a base film of a magnetic recording medium.

Rank Xerox (UK) Business Services
(3.10/3.6/3.3.1)

The present invention relates to a polyethylene 2,6-naphthalate film which is particularly suitable as a base film of a magnetic recording medium.

Hitherto, most of industrially used films are polyethylene terephthalate films. Since the polyethylene terephthalate films are excellent in mechanical and electrical properties, they are used in many fields such as magnetic tapes, electrical insulating materials of, for example, capacitors, wrapping materials, photographic and printing plate fields, and the like. In particular, they have far better properties as the base films of the magnetic recording media than other films and cannot be replaced by other films.

Recently, the magnetic recording media are quickly improved. In view of the increase of a recording density, it is more strongly required than before to reduce a thickness of the base film and improve the surface smoothness of the base film of magnetic recording medium. When the recording density per unit volume is increased by the reduction of film thickness, it is difficult for the polyethylene terephthalate film to achieve the sufficient thickness while maintaining the practical strength. To achieve such object, a polyethylene 2,6-naphthalate attracts attentions. However, the polyethylene 2,6-naphthalate film has often an inferior adhesive force to a magnetic layer to the polyethylene terephthalate, and its surface smoothness is not necessarily satisfactory. Then, the improvement of the adhesive force to the magnetic layer and surface smoothness is required.

An object of the present invention is to provide a polyethylene 2,6-naphthalate film which is useful as a base film of a magnetic recording medium.

According to the present invention, there is provided a laminated polyethylene 2,6-naphthalate film comprising a polyethylene 2,6-naphthalate film and a coating layer which is formed on at least one surface of said polyethylene 2,6-naphthalate film and comprises at least one water-soluble or dispersible resin selected from the group consisting of polyesters, polyurethanes and polyacrylic resins, and satisfying the following properties:

(1) an $F_5$ value in a machine direction of at least $1.5 \times 10^8$ Pa,

(2) a Young's modulus in a machine direction of at least $5.9 \times 10^9$ Pa,

(3) a Young's modulus in a transverse direction of at least $5.9 \times 10^9$ Pa, and

(4) A surface roughness Ra of the coating layer of not larger than 0.020 $\mu$m.

The polyethylene 2,6-naphthalate to be used in the present invention is polyethylene 2,6-naphthalate in which 80 % by mole or more of repeating units consist of ethylene 2,6-naphthalate. The polyethylene 2,6-naphthalate may be a copolymer comprising 20 % or less of other monomer. As the other monomer, diols such as diethylene glycol, propylene glycol, neopentyl glycol, polyethylene glycol, polytetramethylene glycol, etc. and dicarboxylic acids such as terephthalic acid, isophthalic acid, 2,7-naphthalenedicarboxylic acid, 5-sodiumsulfoisophthalic acid, adipic acid, azelaic acid, sebacic acid and their ester-forming derivatives, hydroxycarboxylic acids such as p-hydroxybenzoic acid and their ester-forming derivatives may be used.

In general, the polyethylene 2,6-naphthalate to be used in the present invention has an intrinsic viscosity of at least 0.40, preferably 0.45 to 0.70, since the polyethylene 2,6-naphthalate having a too small molecular weight provides a film having decreased mechanical properties.

A carboxyl group value of the polyethylene 2,6-naphthalate is preferably 15 to 100 equivalent/ton, more preferably 40 to 95 equivalent/ton, in particular 50 to 90 equivalent/ton. The presence of carboxyl groups contribute to the improvement of the adhesive force to the magnetic layer. To achieve the good adhesive force, the carboxyl group value is at least 15 equivalent/ton. But, when the carboxyl group value is too large, the heat resistance and mechanical properties of the polyethylene 2,6-naphthalate film are deteriorated. Then, the carboxyl group value is preferably not larger than 100 equivalent/ton.

The polyethylene 2,6-naphthalate film of the present invention may contain added particles, precipitated particles or catalyst residues which form protrusions on the film surface(s) in such amount that the electromagnetic conversion characteristics of the magnetic recording medium are not deteriorated.

The polyethylene 2,6-naphthalate film of the present invention may optionally contain any additive such as an antistatic agent, a stabilizer, a lubricant, a crosslinking agent, an antiblocking agent, an antioxidant, a colorant, a light shielding agent, a UV light absorber, etc. in addition to the protrusion-forming particles.

Insofar as the finally obtained film has the required properties of the present invention, it may have a multilayer structure. In this case, at least one layer should be made of the polyethylene 2,6-naphthalate according to the present invention.

To impart the adhesion property with a functional layer such as a magnetic layer, the coating layer which comprises at least one water-soluble or dispersible resin (hereinafter referred to as "aqueous resin") selected from the group consisting of polyesters, polyurethanes and polyacrylic resins is formed on at least one surface of the polyethylene 2,6-naphthalate film. In view of safety and hygiene, a coating liquid comprising water as a medium is preferably used.

While it is possible to use an aqueous dispersion of the aqueous resin prepared by forced dispersion using a surfactant, it is preferable to use a self-dispersible resin having a nonionic hydrophilic group such as a polyether group and a hydroxyl group, an ionic hydrophilic group such as a quaternary ammonium group, or more preferably an anionic hydrophilic group.

The resin having the anionic group is a resin to which a compound having the anionic group is bonded by, for example, copolymerization such as graft polymerization. Examples of the compound having the anionic group are sulfonic acids, carboxylic acids, phosphoric acid, and their lithium, sodium, potassium or ammonium salts. An amount of the anionic group is from 0.05 to 8 % by weight based on the resin solid weight. When the amount of the anionic group is less than 0.05 % by weight, the resin tends to have decreased solubility or dispersibility in water. When this amount exceeds 8 % by weight, the coating layer tends to have deteriorated water resistance or the coating layer absorbs moisture so that the films are blocked each other.

Insofar as water is used as a primary medium of the coating liquid, the coating liquid can contain a small amount of an organic solvent to improve the dispersibility of the resin in water or a film-forming property of the coating liquid. When the organic solvent is used in combination with water, it should be used in an amount that the organic solvent is dissolved in water. Examples of the organic solvent are alcohols (e.g. isopropanol, ethanol, etc.), diols (e.g. ethylene glycol, diethylene glycol, etc.), glycol derivatives (e.g. ethylcellosolve, n-butylcellosolve, etc.), ethers (e.g. dioxane, tetrahydrofran, etc.), esters (e.g. ethyl acetate, etc.), ketones (e.g. methyl ethyl ketone, etc.), amides (e.g. N-methylpyrrolidone, etc.), and the like. They may be used independently or as a mixture of two or more of them.

As starting materials for the polyester resin to be contained in the coating layer, the following polybasic carboxylic acids and polyhydric hydroxy compounds can be exemplified.

Examples of the polybasic carboxylic acid are adipic acid, azelaic acid, sebacic acid, dodecanedicarboxylic acid, glutaric acid, succinic acid, 1,4-cyclohexanedicarboxylic acid, 1,3-cyclohexanedicarboxylic acid, terephthalic acid, isophthalic acid, orthophthalic acid, phthalic anhydride, 4,4'-diphenyldicarboxylic acid, 2,5-naphthalenedicarboxylic acid, 2,6-naphthalenedicarboxylic acid, 2-potassiumsulfoterephthalic acid, 5-sodiumsulfoisophthalic acid, 2-sodiumsulfoteraphthalic acid, trimellitic acid, trimesic acid, trimellitic anhydride, monopotassium trimellitate and their ester-forming derivatives. Examples of the polyhydric hydroxy compound are ethylene glycol, 1,2-propylene glycol, 1,3-propylene glycol, 1,3-propanediol, 1,4-butanediol, neopentyl glycol, 1,6-hexanediol, 2-methyl-1,5-pentanediol,1,4-cyclohexanedimethanol, p-xylene glycol, bisphenol A-ethylene glycol adducts, diethylene glycol, triethylene glycol, polyethylene glycol, polypropylene glycol, polytetramethylene glycol, polytetramethyleneoxide glycol, dimethylolpropionic acid, glycerol, trimethylolpropane, sodium dimethylolethylsolfonate, potassium dimethylolpropionate, and the like.

At least one polybasic carboxylic acid and at least one polyhydric hydroxy compound are selected from the above compounds and polycondensated by a conventional method to obtain the polyester. In addition, a complex polymer comprising the polyester component such as a so-called acryl-grafted polyester which is disclosed in Japanese Patent Kokai Publication No. 165633/1989 or a polyesterpolyurethane which is prepared by chain extending a polyesterpolyol with an isocyanate may be used as the polyester according to the present invention.

Main components of the polyurethane resin used according to the present invention are an isocyanate, a polyol, a chain extender, a crosslinking agent, etc. Examples of the isocyanate are tolylenediisocyanate, phenylenediisocyanate, 4,4'-diphenylmethanediisocyanate, hexamethylenediisocyanate, xylylenediisocyanate, 4,4'-dicyclohexylmethanediisocyanate, isophoronediisocyanate, and the like. Examples of the polyols are polyethers such as polyoxyethylene glycol, polyoxypropylene glycol and polyoxytetramethylene glycol; polyesters such as polyethylene adipate, polyethylene-butylene adipate and polycaprolactone; acrylic polyols; castor oil; and the like.

Examples of the chain extender or crosslinking agent are ethylene glycol, propylene glycol, diethylene glycol, trimethylolpropane, hydrazine, ethylenediamine, diethylenetriamine, 4,4'-diaminodiphenylmethane, 4,4'-diaminodicyclohexylmethane,water and the like.

The polyurethane resin having the anionic group may be prepared by reacting polyurethane forming materials including a polyol, a polyisocyanate compound and a chain extender at least one of which has the anionic group, by reacting unreacted isocyanate groups in the synthesized polyurethane with a compound having the anionic group, or reacting an active hydrogen-containing group of the polyurethane with a specific compound.

Examples of the polyurethane forming material having the anionic group are a compound which is prepared by sulfonating an aromatic isocyanate compound, a diaminocarboxylic acid salt, a sulfate ester salt of an aminoalcohol, and the like.

The reaction of the unreacted isocyanate group of the polyurethane with the compound having the anionic group may be a reaction using a bisulfite, an aminosulfonic acid or its salt, an aminocarboxylic acid or its salt, a sulfate easter of an aminoalcohol or its salt, hydroxyacetic acid or its salt, and the like.

The reaction of the active hydrogen-containing group of the polyurethane and the specific compound may be a reaction using a three to seven members ring compound which represents a salt-type group or forms a salt after ring opening, such as a dicarboxylic anhydride, a tetracarboxylic anhydride, sultone, lactone, an epoxycarboxylic acid, an epoxysulfonic acid, 2,4-dioxo-oxazolidine, isatic anhydride, phostone, carbyl sulfate and the like.

Preferably, the polyurethane resin used according to the present invention is a polyurethane which comprises a polyol, a polyisocyanate, a chain extender having the reactive hydrogen atom and at least one compound having a group reactive with the isocyanate group and the anionic group per 100 monomer units and has an average molecular weight of 300 to 20,000.

The polyacrylic resin used according to the present invention preferably comprises an alkyl acrylate or an alkyl methacrylate. In particular, the polyacrylic resin is a water-soluble or dispersible resin comprising 30 to 90 % by mole of the alkyl acrylate or methacrylate and the rest of an acrylic monomer or a vinyl monomer which is copolymerizable with the alkyl acrylate or methacrylate and has a functional group.

The acrylic monomer or vinyl monomer which is copolymerizable with the alkyl acrylate or methacrylate and has the functional group preferably has the functional group which improves the adhesion of the resin comprising such monomer to the polyethylene 2,6-naphthalate film or other coating layer, or affinity with the polyester resin which is contained in the coating liquid. Preferred examples of such functional group are a carboxyl group or its salt, an acid anhydride group, a sulfonic acid group or its salt, an amide group or alkyloled amide group, an amino group, a substituted or alkyloled amino group or its salt, a hydroxyl group, an epoxy group, and the like. The monomer may have two or more functional groups.

Preferably, the polyacrylic resin has an average molecular weight of 300 to 20,000.

When the content of the alkyl acrylate or methacrylate is 30 % by mole or larger, a film-forming property, and strength and antiblocking property of the formed film are improved. When the content of the alkyl acrylate or methacrylate is 90 % by mole or less, the introduction of the compound having the functional group as the comonomer in the polyacrylic resin can improve the adhesion of the coating layer to the polyethylene 2,6-naphthalate film, increase the strength, water resistance or chemical resistance of the coating layer through the reaction in the coating layer, and improve the adhesion of the laminated film of the present invention to other material.

Examples of the alkyl group in the alkyl acrylate or methacrylate are a methyl group, a n-propyl group, an isopropyl group, a n-butyl group, an isopropyl group, a 2-ethylhexyl group, a lauryl group, a stearyl group, a cyclohexyl group, and the like.

The vinyl monomer which is copolymerizable with the alkyl acrylate or methacrylate and has the functional group may be a compound having a reactive group, a self-crosslinkable group, a hydrophilic group, etc. Examples of a compound having the carboxyl group or its salt or the acid anhydride group are acrylic acid, methacrylic acid, itaconic acid, maleic acid, a metal salt (e.g. a sodium salt) or an ammonium salt of such carboxylic acid, and maleic anhydride.

Examples of a compound having the sulfonic acid group or its salt are vinylsulfonic acid, styrenesulfonic acid, and a metal salt (e.g. a sodium salt) or an ammonium salt of such sulfonic acid.

Examples of a compound having the amide group or the alkyloled amide group are acrylamide, methacrylamide, N-methylmethacrylamide, methyloled acrylamide, methyloled methacrylamide, ureidovinyl ether, $\beta$-ureidoisobutyl vinyl ether and ureidoethyl acrylate.

Examples of a compound having the amino group, the alkyloled amino group or its salt are diethylaminoethyl vinyl ether, 2-aminobutyl vinyl ether, 3-aminopropyl vinyl ether, 2-aminobutyl vinyl ether, dimethylaminoethyl methacrylate, dimethylaminoethyl vinyl ether, these compounds in which the amino group is methyloled and quaternary compounds of these compounds with an alkyl halide, dimethyl sulfate or sultone.

Examples of a compound having the hydroxyl group are $\beta$-hydroxyethyl acrylate, $\beta$-hydroxyethyl methacrylate, $\beta$-hydroxypropyl acrylate, $\beta$-hydroxypropyl methacrylate, $\beta$-hydroxyvinyl ether, 5-hydroxypentyl vinyl ether, 6-hydroxyhexyl vinyl ether, polyethylene glycol monoacrylate, polyethylene glycol monomethacrylate, polypropylene glycol monoacrylate and polypropylene glycol monomethacrylate.

Examples of a compound having the epoxy group are glycidyl acrylate and glycidyl methacrylate.

In addition to the above compounds, the following compounds may be used:

Acrylonitrile, styrene compounds, butyl vinyl ether, a mono- or dialkyl ester of maleic acid, a mono- or dialkyl ester of fumaric acid, a mono- or dialkyl ester of itaconic acid, methyl vinyl ketone, vinyl chloride, vinylidene chloride, vinyl acetate, vinylpyridine, vinylpyrrolidone and vinyltrimethoxysilane.

The polyacrylic resin may contain a surfactant. When a content of the polyacrylic resin is relatively large in comparison with the polyester resin and/or the polyurethane resin, a low molecular weight surfactant contained in the polyacrylic resin is concentrated in the film formation step and accumulated at interfaces between particles or migrates on the interface of the coating layer so that the mechanical strength or water resistance of the coating layer or the adhesion of the coating layer to the base film may be deteriorated. To prevent such drawbacks, a resin which is prepared by a so-called soap-free polymerization method using no surfactant can be used.

The preparation method of the aqueous polyacrylic resin which uses no surfactant is disclosed in, for example, "Collective Technical Documents of Water-Soluble Polymers and Water-Dispersible Resins" page 309 (edited and published by the Publishing Division of the Business Development Center in January 1981) or the text book of the lecture entitled "Future Views from the Recent Research Results - New Developments of Emulsions and Future Technical Problems" (December 1981).

For the preparation of the water-dispersible polyacrylic resin in the absence of the surfactant, an oligomeric or polymeric surfactant is used in place of the low molecular weight surfactant, a hydrophilic group is introduced in the polyacrylic resin by the use of potassium persulfate or ammonium persulfate as a polymerization initiator, a monomer having a hydrophylic group is copolymerized, a reactive surfactant is used, a so-called core-shell form polymer having different structures between an inner part and a surface part of each polymer particle is prepared.

In the present invention, preferably at least 50 % by weight of the solid content comprises at least one resin selected from the group consisting of the polyester resin, the polyurethane resin and the polyacrylic resin. These resins may be used independently or as a mixture of two or three of them in an arbitrary ratio. To achieve sufficient adhesion between the coating layer and the polyethylene 2,6-naphthalate film, preferably at least 5 % by weight of the resin component is the polyester resin. To increase the film strength of the coating layer, the solid content of the aqueous resins is at least 50 % by weight, preferably at least 80 % by weight in the coating liquid.

It is preferable to add a lubrication-improving agent such as particles or a lubricant in the coating liquid so as to improve a running or slipping property on the coating layer.

Examples of such particles are inorganic particles such as calcium carbonate, silica, silica sol, alumina, alumina sol, zirconium sol, kaolin, talc, calcium carbonate, calcium phosphate, titanium oxide, barium sulfate, carbon black, molybdenum sulfide, antimony oxide sol, and organic particles such as those comprising polyacrylic resin or polyvinyl resin or copolymers thereof or crosslinked particles of such resins with a crosslinking component.

Preferably, at least 50 % by weight, in particular at least 70 % by weight of all the particles are the organic particles. In general, the organic particles have good affinity with the resin which forms the coating layer and hardly drop off from the coating layer, so that they contribute to the improvement of abrasion resistance and scratch resistance of the coating layer.

The organic particles used according to the present invention substantially consist of an organic compound, and include particles of polystyrene, polyethylene, polyamide, polyester, polyacrylate, epoxy resin, polyvinyl acetate or polyvinyl chloride or their copolymers, which may contain a crosslinking agent, silicon resin, fluororesin and the like. Preferably, the particles are the crosslinked polymer particles since they are less thermally deformed.

An example of the crosslinked polymer particles is a copolymer of an ethylenically monounsaturated compound having one aliphatic unsaturated bond and a crosslinking component having at least two aliphatic unsaturated bonds. In addition, thermosetting phenol resin, thermosetting epoxy resin, thermosetting urea resin, benzoguanamine resin and the like may be used. The organic particles to be used according to the present invention may have a layered structure. In particular, crosslinked polymer particles prepared by copolymerizing (1) at least one compound selected from the group consisting of acrylic acid, methacrylic acid, their alkyl esters and styrene or its alkyl derivatives and (2) at least one compound selected from the group consisting of divinylbenzene and ethylene glycol dimethacrylate are preferably used.

A shape of the particle is not limited and may be a sphere, a bulk or a plate. According to the surface properties of the coating layer, the shape of the particle is selected.

The particles have a particle size distribution close to a monodisperse. A particle size distribution value is preferably not larger than 1.60, more preferably not larger than 1.50, in particular not larger than 1.40. The "particle size distribution value" herein used is defined by the following equation:

Particle Size Distribution Value $= d_{25}/d_{75}$

where $d_{25}$ and $d_{75}$ represent particle sizes ($\mu$m) corresponding to 25 % and 75 %, respectively of the whole volume when an integrated volume of the particles is measured from the largest particles.

A content of the particles in the coating layer is from 0.4 to 40 % by weight, preferably from 1 to 20 % by weight based on the weight of the whole coating layer. When the content of the particles is less than 0.4 % by weight, the coating layer may have an insufficient antiblocking property or an insufficiently improved sliding property. When the content of the particles exceeds 40 % by weight, the strength of the coating layer is decreased and the organic particles tend to drop off.

Examples of the lubricant to be used according to the present invention are anionic surfactants, cationic surfactants, amphoteric surfactants, nonionic surfactants, fluorine-containing surfactants, organic carboxylic acids and their derivatives, higher aliphatic alcohols, paraffins, waxes, and the like. Among them, polyolefin and silicone lubricants are preferred.

Examples of the polyolefin lubricants are waxes, resins or rubbers comprising a homo- or copolymer of a 1-olefin such as ethylene, propylene, 1-butene or 4-methyl-1-pentene, for example, polyethylene, polypropylene, poly-1-butene, poly-4-methyl-1-pentene, ethylene-propylene copolymer; aliphatic dicarboxylic acids such as azelaic acid and sebacic acid and their ester-forming derivatives; and hydroxycarboxylic acids such as hydroxybenzoic acid and their ester-forming derivatives.

Examples of the silicone lubricant are unmodified silicone such as dimethylpolysiloxane, and modified silicone which is modified with an aliphatic acid, a polyether, an alcohol or a polar group such as an alkyl group. The silicone modified with the polar group is particularly suitable since it has good affinity with the binder resin.

The lubricant to be used according to the present invention is compounded in the resin selected from the aqueous polyurethane resins, the aqueous polyacrylic and the aqueous polyester resin, and preferably it is exuded on the coating layer surface in a suitable amount when the polyethylene 2,6-naphthalate film on which the coating layer is formed is stretched or heat set. Since the exuded lubricant forms a sliding layer on the film surface, the handling property of the film during production and processing is improved, scratches due to contact to the rolls are suppressed and adhesion to the heating roll is prevented.

A content of the lubricant is preferably from 0.5 to 20 % by weight based on the weight of the coating layer. When the content of the lubricant is less than 0.5 % by weight, an exuded amount of the lubricant on the coating layer surface is too small so that the effects of the lubricant may not be achieved. When this content exceeds 20 % by weight, too much lubricant is exuded on the coating layer surface so that the easy adhesion effect of the binder for an ink, and the like may be deteriorated.

When molecules of the lubricant which exudes in a suitable amount are orientated with the hydrophobic groups being outside, the antisticking effect of the lubricant is most effectively achieved. The orientation state of the lubricant molecules can be expressed by a contact angle of water thereon. When the contact angle of water is in the range between 70° and 85°, the antisticking effect is highly achieved.

To improve the blocking property, water resistance, solvent resistance and mechanical strength of the coating layer, the coating liquid may contain a crosslinking agent. Examples of the crosslinking agent are methyloled or alkyloled urea compounds, melamine compounds, guanamine compounds, acrylamide compounds, polyamide compounds, epoxy compounds, aziridine compounds, blocked polyisocyante, silane coupling agents, titanate coupling agent, zirco-aluminate coupling agents, peroxides, heat or light-sensitive vinyl compounds, photosensitive resins, and the like. If necessary, the coating liquid may contain an antifoaming agent, a coating property improver, a thickening agent, an antistatic agent, an organic lubricant, an antioxidant, a UV light absorber, a foaming agent, a dye, a pigment, and the like.

A dry thickness of the coating layer is preferably from 0.003 to 2 $\mu$m, more preferably from 0.01 to 1 $\mu$m, most preferably from 0.03 to 0.2 $\mu$m. When the thickness of the coating layer is more than 2 $\mu$m, the films tend to block each other, or the film tends to stick to the roll when the coated film is reoriented to increase the strength of the film. When this thickness is less than 0.003 $\mu$m, it is difficult to obtain a uniform film.

The coating liquid which is prepared as described above is applied on the polyethylene 2,6-naphthalate film by any of conventional coating apparatuses such as a reverse roll coater, a gravure coater, a rod coater, an air doctor coater, and the like.

Preferably, the coating liquid is applied on the polyethylene 2,6-naphthalate in the film production step. For example, the coating liquid can be applied on the unoriented or oriented film using the above coating apparatus, and then the film carrying the coating film is oriented at least in one direction and heat set to form the coating layer on the film. Preferably, the coating liquid is applied on the film which has been oriented at least in one direction, and then the film is oriented at least in one direction. If the film is not oriented after the application of the coating liquid, the bond strength between the formed coating layer and the base film is weak, so that the practically acceptable adhesion may not be obtained.

In a preferred embodiment, the coating liquid is applied on the polyethylene 2,6-naphthalate film which has been biaxially oriented, and then, in a dried or undried state of the coating liquid, the film is again oriented in a machine direction and/or a transverse direction. Alternatively, the biaxially oriented polyethylene 2,6-naphthalate film is reoriented in either one of the machine and transverse directions, and the coating liquid applied thereon. Thereafter, in the dried or undried state of the coating liquid, the film is further oriented in the direction perpendicular to the previous reorientation direction. More preferably, the coating liquid is applied on the polyethylene 2,6-naphthalate film which has been oriented in a machine direction, and in the dried or undried state of the coating liquid, the film is oriented in the transverse direction and heat set.

Since orientation of the film in the coating step of the coating layer has influences on the film properties, it is maintained in a suitable range. A degree of orientation is conveniently expressed in terms of a degree of planer orientation ($\Delta P$) which is calculated from a refractive index. For example, when the coating liquid is applied on the polyethylene 2,6-naphthalate which has been biaxially oriented and again oriented, the degree of planer orientation of the oriented film is usually from $200 \times 10^{-3}$ to $300 \times 10^{-3}$, preferably from $210 \times 10^{-3}$ to $280 \times 10^{-3}$, more preferably from $220 \times 10^{-3}$ to $270 \times 10^{-3}$. When the coating liquid is applied on the uniaxially oriented polyethylene 2,6-naphthalate film, the degree of planer orientation is usually from $70 \times 10^{-3}$ to $300 \times 10^{-3}$, preferably from $100 \times 10^{-3}$ to $280 \times 10^{-3}$, more preferably $120 \times 10^{-3}$ to $270 \times 10^{-3}$. When the degree of planer orientation exceeds $300 \times 10^{-3}$ the adhesion between the coating layer and the polyethylene 2,6-naphthalate film tends to decrease. When the degree of planer orientation is less than $200 \times 10^{-3}$ in the case of the biaxially oriented film or less than $70 \times 10^{-3}$ in the case of the uniaxially oriented film, desired strength of the film may not be attained.

The film is oriented preferably at a temperature of 120 to 180°C and a draw ratio is at least 4 times, preferably from 6 to 20 times in terms of an area ratio.

The oriented film is heat treated at a temperature of 150 to 250°C. Preferably, the film is shrunk by 0.1 to 20 % in the machine and transverse directions in the maximum temperature zone and/or a cooling zone in the heat treatment step.

In a preferred embodiment, the polyethylene 2,6-naphthalate film is stretched in the machine direction by the roll stretching at a temperature of 120 to 180°C at a draw ratio of 2 to 6 times, the coating layer is applied on the uniaxially oriented film and optionally dried. Then the film carrying the dried or undried coating liquid is oriented in the transverse direction at a temperature of 120 to 180°C at a draw ratio of 2 to 6 times and further oriented in the machine direction at a temperature of 120 to 180°C at a draw ratio of 1.01 to 1.9 times, and the oriented film is heat treated at a temperature of 150 to 250°C for 1 to 600 seconds. Before the heat treatment, the film can be again stretched in the transverse direction at a temperature of 120 to 230°C at a draw ratio of 1.01 to 1.9 times, whereby the strength in the transverse direction is increased.

According to the method of the present invention, the coating liquid can be dried simultaneously with the orientation of the film, and the thickness of the coating layer is made thin depending on the draw ratio of the film. Therefore the polyethylene 2,6-naphthalate film which is suitable as a base film can be produced at a comparatively low cost.

The coating liquid may be applied on either one or both of the surfaces of the polyethylene 2,6-naphthalate film. When the coating liquid is applied on one surface, a coating layer other than that of the present invention may be formed on the other surface to impart the polyethylene 2,6-naphthalate film with some other properties.

The surface of the polyethylene 2,6-naphthalate film may be chemically treated or treated with electrical discharge before the application of the coating liquid so as to improve the coating property and the adhesion of the coating liquid. Further, the formed coating layer may be treated by electrical discharge to improve the surface property of the coating layer.

In the present invention, the polyethylene 2,6-naphthalate film has an $F_5$ strength value at 5 % elongation in the machine direction of at least $1.5 \times 10^8$ Pa, in preferably at least $1.8 \times 10^8$. The Young's modulus of the polyethylene 2,6-naphthalate film in the machine direction is usually at least $5.9 \times 10^9$ Pa, preferably at least $6.4 \times 10^9$ Pa, more preferably at least $6.9 \times 10^9$ Pa, in particular at least $7.4 \times 10^9$ Pa, and the Young's modulus in the transverse direction is usually at least $5.9 \times 10^9$ Pa, preferably at least $6.4 \times 10^9$ Pa, more preferably at least $6.9 \times 10^9$ Pa, in particular at least $7.4 \times 10^9$ Pa. When the film does not satisfy the above strength values, it is difficult to reduce the thickness of the film. That is, under tension, the film suffers from excessive elongation. In particular, when the polyethylene 2,6-naphthalate film is used as the base film of the magnetic recording medium, too much elongation causes deformation of a picture which is called as a skew or deteriorates sound tone.

When the thin film is required, the present invention can provide the film having a thickness of 9 $\mu$m or less, preferably 7 $\mu$m or less, more preferably 5 $\mu$m or less.

The polyethylene 2,6-naphthalate film which is produced as described above has a density of at least 1.360 g/cm$^3$, preferably at least 1.370 g/cm$^3$. When the film has the small density, the dimensional stability of the film tends to deteriorate.

To maintain the dimensional stability of the polyethylene 2,6-naphthalate film, shrinkage factors both in the machine and transverse directions should be 5 % or less, preferably 3 % or less, more preferably 2 % or less when the film is kept at 150°C for 30 minutes. Such shrinkage factor can be obtained by the shrinkage in the heat setting step.

Preferably, the coating layer which is formed as above has a center line average roughness (Ra) of 0.020 $\mu$m or less, preferably from 0.002 to 0.020 $\mu$m, more preferably from 0.003 to 0.015 $\mu$m, in particular from 0.003 to 0.010 $\mu$m. When Ra exceeds 0.020 $\mu$m, the surface of the coating layer is too rough, so that, when the laminated film of the present invention is used as the base film of the magnetic recording medium, the electromagnetic conversion characteristics such as a S/N ratio are deteriorated or the number of dropouts increases.

The present invention will be illustrated by the following Examples, which are not intended to limit the scope of the present invention in any way. In Examples, "parts" and "%" are by weight.

In Examples, the properties and characteristics are measured or evaluated as follows:

(1) <u>Tensile strength</u> (F$_5$ value)

Using a tensile tester (Intesco Model 2001 manufactured by Intesco, Ltd.), a sample film having a length of 50 mm and a width of 15 mm is pulled at a rate of 50 mm/min. at 23°C, 50 %RH, and a strength at an elongation of 5 % is recorded as the F$_5$ value.

(2) <u>Young's modulus</u>

Using a tensile tester (Intesco Model 2001 manufactured by Intesco, Ltd.), a sample film having a length of 300 mm and a width of 20 mm is pulled at a strain rate of 10 %/min. at 23°C, 50 %RH, and a Young's modulus is calculated from the initial slope of a tensile stress-strain curve according to the following equation:

$$\text{Young's modulus (E)} = \Delta\sigma/\Delta\epsilon$$

wherein $\Delta\sigma$ is a stress difference between two points on the initial slope based on the original average cross section, and $\Delta\epsilon$ is a strain different between the same two points.

(3) <u>Center line average roughness (Ra)</u>

Using a surface roughness tester (SE-3F manufactured by Kosaka Kenkyusho, Ltd.), the center line average roughness Ra is measured according to JIS B-0601-1976, with necessary modifications. The measuring conditions are the use of a contact needle having a tip radius of 2 $\mu$m, 30 mg of probe contact pressure, 0.08 mm of cutoff, and 2.55 mm of a measuring length.

The measurement is performed at 10 points on the film and the surface roughnesses are averaged.

(4) <u>Refractive index of the film</u>

Using a Carl-Zeiss polarization light microscope, retardation of the film is observed, and a birefringence index ($\Delta$n) = R/d in which R is the retardation and d is a film thickness, and a direction of the maximum refractive index n$\gamma$ in the film plane are determined.

Then, using an Abbe refractometer (Type 4T manufactured by Atago Optical Co., Ltd.), a refractive index n$\beta$ in the film plane in a direction perpendicular to the direction of n$\gamma$ and a refractive index n$\alpha$ in the film thickness direction are measured with the sodium D line at 23°C. From these values, a degree of orientation in plane is calculated according to the following equations:

$$\Delta n = n\gamma - n\beta$$

$$\Delta P = (n\gamma + n\beta)/2 - n\alpha$$

(5) Blocking property

The blocking property is evaluated by heat pressing a pair of films in a thermo-hygrostat at 40°C, 80 %RH under 10 kgf/cm$^2$ for 20 hours, and a peeling strength of the adhered films is measured according to ASTM-D-1893. The results are ranked according to the following criteria:

O:    Less than 5 g/cm.
△:    5 to 10 g/cm.
X:    Larger than 10 g/cm.

(6) Adhesion of the magnetic layer

Magnetic fine powder (200 parts), a polyurethane resin (30 parts), nitrocellulose (10 parts), a vinyl chloride-vinyl acetate copolymer (10 parts), lecitin (5 parts), cyclohexanone (100 parts) and methyl ethyl ketone (300 parts) are mixed and dispersed in a ball mill for 48 hours, followed by the addition of a polyisocyanate compound (5 parts) to obtain a magnetic paint.

The magnetic paint is coated on a polyester film to a dry thickness of 5 $\mu$m, magnetically orientated before it is sufficiently dried and then dried.

A double-coated adhesive tape (Scotch Tape No. 665 manufactured by Sumitomo 3M) is adhered to the magnetic layer and 180 degree peeling strength is measured using a tensile tester (Intesco Model 2001 manufactured by Intesco, Ltd.) at a pulling rate of 500 mm/min. at 23°C, 50 %RH. The bonding force is ranked according to the following criteria:

O:    Larger than 30 grf.
△:    15 to 30 grf.
X:    Smaller than 15 grf.

(7) Characteristics of a video tape
(Characteristics of a magnetic recording medium)

A video tape is produced as follows:

The magnetic film prepared in the same manner as in the above test (6) [Bonding strength of the magnetic layer] is subjected to super calendering and slit at a width of 1/2 inch to obtain a video tape.

The characteristics of the video tape are evaluated using a NV-3700 video deck (manufactured by Matsushita Electric) at a normal speed.

VTR head output

A VTR head output at a measuring frequency of 4 MHz is measured by a synchroscope. The measured value is expressed as a relative value (dB) to a value of a standard tape (0 dB).

O:    Larger than +2 dB.
△:    +0 to +2 dB.
X:    Smaller than 0 dB.

Skew amount

A skew amount is measured by reproducing the video tape which records chroma video signals, carrying out delayed sweeping with a color monitor (CMM 20-11 manufactured by Shibasoku Co., Ltd.), reading a skew amount on the screen and converting the read skew amount to a one horizontal scanning time in comparison with a full width of the monitor screen to obtain the skew amount in the unit of "$\mu$sec.", which is ranked according to the following criteria:

O:    Shorter than 2 $\mu$sec.
△:    2 to 5 $\mu$sec.
X:    Longer than 5 $\mu$sec.

(8) Abrasion characteristics

The magnetic film is slit at a width of 1/2 inch and run for 1000 m at a film speed of 13 m/min. under a tension of about 200 gf with contacting it to a fixed pin made of hard chromium at a contact angle of 135°. Then, an amount of white powder adhered to the fixed pin is observed with naked eyes and evaluated according to the following criteria:

O: No white powder

△: A mall amount of white powder

X: A large amount of white powder

(9) Carboxyl group value

A carboxyl group value is measured according to the Pohl method (Anal. Chem., 26, 1614 (1954)).

Example 1

Preparation of polyethylene 2,6-naphthalate

In a reactor, dimethyl naphthalene-2,6-dicarboxylate (100 parts), ethylene glycol (60 parts) and calcium acetate monohydrate (0.1 part) were subjected to the transesterification reaction, by raising a temperature of the mixture from a starting temperature of 180°C while gradually removing methanol up to 230°C after 4 hours to complete the transesterification. After the addition of phosphoric acid (0.04 part), antimony trioxide (0.04 part) and silica particles having a particle size of 0.5 $\mu$m (0.2 part) were added to effect the polycondensation reaction by gradually raising the temperature while gradually reducing a pressure. After 2 hours, the temperature reached 290°C, and the pressure was reduced down to 0.3 mmHg.

After 4 hours, the reaction was terminated, and polyethylene naphthalate was discharged by pressurizing the reactor with nitrogen gas.

The molten polymer was directly charged into an extruder, filtrated through a filter, extruded in a strand form and cut to obtain polymer chips which were used as a polymer raw material. The obtained polyethylene 2,6-naphthalate had an intrinsic viscosity of 0.68 and a carboxyl group value of 80 equivalent/ton.

Production of polyethylene 2,6-naphthalate film

The polyethylene 2,6-naphthalate raw material was dried and extruded from an extruder in the form of a sheet and cooled with applying the electropinning method to obtain an amorphous polyester sheet. This sheet was stretched in the machine direction at 135°C at a draw ratio of 3.0 times.

On one surface of the sheet, was coated a coating liquid containing 1900 parts of water and 100 parts of an aqueous polyester which consisted of 92 % by mole of terephthalic acid and 8 % by mole of sodium sulfoisophthalate as the dicarboxylic acid components, and 75 % by mole of ethylene glycol and 25 % by mole of diethylene glycol as the glycol components.

Then, the film carrying the applied coating liquid was stretched in the transverse direction at 130°C at a draw ratio of 4.0 times, and again in the machine direction at 160°C at a draw ratio of 1.8 times and in the transverse direction at 220°C at a draw ratio of 1.3 times, followed by heat setting at 230°C with tentering. The film was then cooled and wound with shrinking the film by 4 % in each of the machine and transverse directions to obtain a laminated biaxially oriented polyethylene 2,6-naphthalate film, which had a coating layer thickness of 0.06 $\mu$m, a polyester film thickness of 4.5 $\mu$m, a $F_5$ value of 2.1 x $10^8$ Pa, a Young's modulus in the machine direction of 8.1 x $10^9$ Pa, a Young's modulus in the transverse direction of 7.6 x $10^9$ Pa, a density of 1.375 g/cm$^3$, and a center line average surface roughness Ra on the coating layer of 0.008 $\mu$m.

Before coating, the film had a degree of orientation in plane of 159 x $10^{-3}$.

The properties of the laminated film are shown in Table 1.

Example 2

In the same manner as in Example 1 except that an aqueous polyurethane resin (100 parts) consisting of isophorone diisocyanate as the isocyanate component and polyesterpolyol as the polyol component was used in place of the aqueous polyester resin, a laminated biaxially oriented polyethylene 2,6-naphthalate film was produced.

The properties of the laminated film are shown in Table 1.

Example 3

In the same manner as in Example 1 except that an aqueous polyacrylic resin (100 parts) consisting of methyl acrylate, isobutyl methacrylate, acrylic acid and its ammonium salt, methacrylic acid and its ammonium salt and glycidyl methacrylate was used in place of the aqueous polyester resin, a laminated biaxially oriented polyethylene 2,6-naphthalate film was produced.

The properties of the laminated film are shown in Table 1.

Example 4

In the same manner as in Example 1 except that a mixture of 20 parts of the aqueous polyester resin and 80 parts of the aqueous polyacrylic resin which was the same as used in Example 3 was used in place of the aqueous polyester resin, a laminated biaxially oriented polyethylene 2,6-naphthalate film was produced.

The properties of the laminated film are shown in Table 1.

Comparative Example 1

In the same manner as in Example 1 except that no coating layer was formed, a biaxially oriented polyethylene 2,6-naphthalate film was produced.

The properties of the laminated film are shown in Table 1. This film had poor adhesion of the magnetic layer and was not practically used.

Comparative Example 2

In the same manner as in Example 1 except that an aqueous polyolefin resin (100 parts) in place of the aqueous polyester resin, a laminated biaxially oriented polyethylene 2,6-naphthalate film was produced.

The properties of the laminated film are shown in Table 1. This film had poor adhesion of the magnetic layer and was not practically used.

Comparative Example 3

Production of polyethylene terephthalate film

A conventional polyethylene terephthalate raw material was dried and extruded from an extruder at 290°C in the form of a sheet and cooled with applying the electropinning method to obtain an amorphous polyester sheet. This sheet was stretched in the machine direction at 90°C at a draw ratio of 4.5 times.

On one surface of the sheet, was coated a coating liquid containing 1900 parts of water, 10 parts of silica sol having an average particle size of 0.07 $\mu$m and 90 parts of an aqueous polyester which consisted of 92 % by mole of terephthalic acid and 8 % by mole of sodium sulfoisophthalate as the dicarboxylic acid components, and 75 % by mole of ethylene glycol and 25 % by mole of diethylene glycol as the glycol components.

Then, the film carrying the applied coating liquid was stretched in the transverse direction at 100°C at a draw ratio of 3.8 times, and again in the machine direction at 130°C at a draw ratio of 1.3 times and in the transverse direction at 190°C at a draw ratio of 1.1 times, followed by heat setting at 230°C with tentering. The film was then cooled and wound with shrinking the film by 4 % in each of the machine and transverse directions to obtain a laminated biaxially oriented polyethylene terephthalate film, which had a coating layer thickness of 0.06 $\mu$m and a base film thickness of 4.5 $\mu$m. Before coating, the film had the degree of orientation in plane of $102 \times 10^{-3}$.

The properties of the film are shown in Table 1. The film had poor skew property and was not practically used.

Table 1

| Example No. | Base film *1) | Orientation degree in plane $(\Delta P)$ x $10^{-3}$ | $F_5$ value x $10^8$ (Pa) | Young's modulus x $10^9$ (Pa) | | Ra ($\mu$m) | Thickness of coating layer ($\mu$m) |
|---|---|---|---|---|---|---|---|
| | | | | Machine direction | Transverse direction | | |
| 1 | PEN | 159 | 2.1 | 8.2 | 7.4 | 0.008 | 0.06 |
| 2 | PEN | 159 | 2.1 | 8.2 | 7.4 | 0.008 | 0.06 |
| 3 | PEN | 159 | 2.1 | 8.2 | 7.4 | 0.008 | 0.06 |
| 4 | PEN | 159 | 2.1 | 8.2 | 7.4 | 0.008 | 0.06 |
| C. 1 | PEN | --- | 2.1 | 8.2 | 7.4 | 0.009 | --- |
| C. 2 | PEN | 159 | 2.1 | 8.2 | 7.4 | 0.008 | 0.06 |
| C. 3 | PET | 102 | 1.4 | 6.3 | 6.3 | 0.008 | 0.06 |

Note: *1) PEN: Polyethylene 2,6-naphthalate.
PET: Polyethylene terephthalate.
*2) The orientation degree in plane before coating.

Table 1 (continued)

| Example No. | Abrasion property (white powder) | Adhesion of magnetic layer | VTR head output (dB) | Skew ($\mu$sec.) | Overall evaluation |
|---|---|---|---|---|---|
| 1 | O | O | O (+2.5) | O (1.5) | O |
| 2 | O | O | O (+2.3) | O (1.6) | O |
| 3 | O | O | O (+2.3) | O (1.6) | O |
| 4 | O | O | O (+2.4) | O (1.5) | O |
| C. 1 | O | X | O (+2.6) | O (1.5) | X |
| C. 2 | O | X | O (+2.3) | O (1.5) | X |
| C. 3 | O | O | O (+2.0) | X (>6) | X |

Example 5

In the same manner as in Example 1 except that there was used a coating liquid consisting of 1900 parts of water, 10 parts of spherical particles of a crosslinked copolymer of divinyl benzene and methyl methacrylate having an average particle size of 0.07 $\mu$m and 90 parts of an aqueous polyester resin consisting of 92 % by mole of terephthalic acid and 8 % by mole of disodium sulfoisophthalate as the dicarboxylic acid components, and 75 % by mole of ethylene glycol and 25 % by mole of diethylene glycol as the glycol components, a laminated biaxially oriented polyethylene 2,6-naphthalate film having a coating layer thickness of 0.06 $\mu$m and a base film thickness of 4.5 $\mu$m was produced. Before coating, the film had the density of 1.375 g/cm$^3$.

The properties of the laminated film are shown in Tables 3, 4 and 5.

Example 6

In the same manner as in Example 5 except that spherical crosslinked polystyrene particles having an average particle size of 0.07 $\mu$m in place of the crosslinked copolymer particles, a laminated biaxially oriented polyethylene 2,6-naphthalate film was produced.

The properties of the laminated film are shown in Tables 3, 4 and 5.

Example 7

In the same manner as in Example 5 except that the average particle size of the crosslinked copolymer particles was changed to 0.15 $\mu$m and the coating layer thickness was changed to 0.10 $\mu$m, a laminated biaxially oriented polyethylene 2,6-naphthalate film was produced.

The properties of the laminated film are shown in Tables 3, 4 and 5.

Example 8

In the same manner as in Example 7 except that spherical crosslinked polystyrene particles having an average particle size of 0.12 $\mu$m in place of the crosslinked copolymer particles, a laminated biaxially oriented polyethylene 2,6-naphthalate film was produced.

The properties of the laminated film are shown in Tables 3, 4 and 5.

Example 9

In the same manner as in Example 5 except that the amount of the crosslinked copolymer particles was changed to 30 parts, a laminated biaxially oriented polyethylene 2,6-naphthalate film was produced.

The properties of the laminated film are shown in Tables 3, 4 and 5.

Example 10

In the same manner as in Example 5 except that a coating liquid consisting of 1900 parts of water, 85 parts of a water-dispersible polyesterpolyurethane (Hydran AP-40 manufactured by Dainippon Ink & Chemical Co., Ltd.) and 15 parts of crosslinked polymethyl methacrylate particles having an average particle size of 0.07 $\mu$m was coated on one surface of the film, a laminated biaxially oriented polyethylene 2,6-naphthalate film was produced.

The properties of the laminated film are shown in Tables 3, 4 and 5.

Comparative Example 4

A conventional polyethylene terephthalate raw material was dried and extruded from an extruder at 290°C in the form of a sheet and cooled with applying the electropinning method to obtain an amorphous polyester sheet. This sheet was stretched in the machine direction at 90°C at a draw ratio of 4.5 times.

On one surface of the sheet, was coated a coating liquid containing 1900 parts of water, 10 parts of divinylbenzene/methyl methacrylate copolymer particles having an average particle size of 0.07 $\mu$m and 90 parts of an aqueous polyester which consisted of 92 % by mole of terephthalic acid and 8 % by mole of sodium sulfoisophthalate as the dicarboxylic acid components, and 75 % by mole of ethylene glycol and 25 % by mole of diethylene glycol as the glycol components.

Then, the film carrying the applied coating liquid was stretched in the transverse direction at 100°C at a draw ratio of 3.8 times, and again in the machine direction at 130°C at a draw ratio of 1.3 times and in the transverse direction at 190°C at a draw ratio of 1.1 times, followed by heat setting at 230°C with tentering. The film was then cooled and wound with shrinking the film by 4 % in each of the machine and transverse directions to obtain a laminated biaxially oriented polyethylene terephthalate film, which had a coating layer thickness of 0.06 $\mu$m and a base film thickness of 4.5 $\mu$m.

The properties of the film are shown in Tables 3, 4 and 5. The film had poor skew property and was not practically used.

Table 3

| Example No. | Coating layer thickness ($\mu$m) [t] | Particles in coating layer | | | d/t | Amount of particles (wt.%) |
|---|---|---|---|---|---|---|
| | | Kind | Size ($\mu$m) [d] | Distriution | | |
| 5 | 0.06 | Polyacryl | 0.07 | 1.25 | 1.17 | 10 |
| 6 | 0.06 | Polystyrene | 0.07 | 1.35 | 1.17 | 10 |
| 7 | 0.10 | Polyacryl | 0.15 | 1.29 | 1.50 | 10 |
| 8 | 0.10 | Polystyrene | 0.12 | 1.40 | 1.20 | 10 |
| 9 | 0.06 | Polyacryl | 0.07 | 1.25 | 1.17 | 25 |
| 10 | 0.06 | Polyacryl | 0.07 | 1.25 | 1.17 | 10 |
| C. 4 | 0.06 | Polyacryl | 0.07 | 1.25 | 1.17 | 10 |

Table 4

| Example No. | $F_5$ value ($10^8$ Pa) | Young's modulus ($10^3$ Pa) | | Ra ($\mu$m) | Blocking | Slipping property ($\mu$d) |
|---|---|---|---|---|---|---|
| | | Machine | Transverse | | | |
| 5 | 2.1 | 8.2 | 7.4 | 0.008 | O | O (0.40) |
| 6 | 2.1 | 8.2 | 7.4 | 0.008 | O | O (0.45) |
| 7 | 2.1 | 8.2 | 7.4 | 0.009 | O | O (0.36) |
| 8 | 2.1 | 8.2 | 7.4 | 0.007 | O | O (0.40) |
| 9 | 2.1 | 8.2 | 7.4 | 0.010 | O | O (0.40) |
| 10 | 2.1 | 8.2 | 7.4 | 0.008 | O | O (0.38) |
| C. 4 | 1.4 | 6.3 | 6.3 | 0.008 | O | O (0.40) |

Table 5

| Example No. | Abrasion (white powder) | VTR head output (dB) | Skew ($\mu$sec.) | Bonding of magnetic layer | Overall evaluation |
|---|---|---|---|---|---|
| 5 | O | O (2.8) | O (1.5) | O | O |
| 6 | O | O (2.7) | O (1.6) | O | O |
| 7 | O | O (2.3) | O (1.7) | O | O |
| 8 | O | O (2.6) | O (1.6) | O | O |
| 9 | O | O (2.1) | O (1.6) | O | O |
| 10 | O | O (2.8) | O (1.6) | O | O |
| C. 4 | O | O (2.0) | X (>6) | O | X |

Example 11

In the same manner as in Example 1 except that there was used a coating liquid consisting of 1900 parts of water, 5 parts of a polyolefin wax (NOPCOAT PEM-17 manufactured by Sannopco) as a lubricant and 95 parts of an aqueous polyester resin consisting of 92 % by mole of terephthalic acid and 8 % by mole of sodium sulfoisophthalate as the dicarboxylic acid components, and 75 % by mole of ethylene glycol and 25 % by mole of diethylene glycol as the glycol components, a laminated biaxially oriented polyethylene 2,6-naphthalate film having a coating layer thickness of 0.06 $\mu$ m, a base film thickness of 4.5 $\mu$m, a $F_5$ value of 2.1 x $10^8$ Pa, a Young's modulus in the machine direction of 8.1 x $10^9$ Pa, a Young's modulus in the transverse direction of 7.6 x $10^9$ Pa, a density of 1.375 g/cm$^3$, and Ra on the coating surface layer of 0.008 $\mu$m.

The properties of the film are shown in Table 6.

Example 12

In the same manner as in Example 11 except that 90 parts of the aqueous polyester, 5 parts of a water soluble polyalkylene glycol (PAG)-modified silicone (Toshiba Silicone YF 3842) as a lubricant and 5 parts of silica particles having an average particle size of 0.1 $\mu$m, a laminated biaxially oriented polyethylene 2,6-naphthalate film was produced.

The properties of the laminated film are shown in Table 6.

Example 13

In the same manner as in Example 11 except that there was used an aqueous polyurethane which was obtained from 10 parts of isophoronediisocyanate and 90 parts of a carboxyl group-modified polyester which was a reaction product of 94 % by weight of polyester consisting of 60 % by mole of terephthalic acid and 40 % by mole of isophthalic acid as the dicarboxylic acid components, and 61 % by mole of ethylene glycol and 39 % by mole of diethylene glycol as the glycol components and 6 % by weight of 2,2-dimethylolpropionic acid, in place of the aqueous polyester, a laminated biaxially oriented polyethylene 2,6-naphthalate film was produced.

The properties of the laminated film are shown in Table 6.

Example 14

In the same manner as in Example 11 except that there was used a polyacrylate emulsion which was prepared by emulsion polymerizing 51 parts of ethyl acrylate, 40 parts of methyl methacrylate and 9 parts of methacrylic acid and pH of which was adjusted at 7.5 with aqueous ammonia, a laminated biaxially oriented polyethylene 2,6-naphthalate film was produced.

The properties of the laminated film are shown in Table 6.

Comparative Example 5

A conventional polyethylene terephthalate raw material was dried and extruded from an extruder at 290 °C in the form of a sheet and cooled with applying the electropinning method to obtain an amorphous polyester sheet. This sheet was stretched in the machine direction at 90 °C at a draw ratio of 4.5 times.

On one surface of the sheet, was coated a coating liquid containing 1900 parts of water, 5 parts of a polyolefin wax (Nopcoat PEM-17) and 95 parts of an aqueous polyester which consisted of 92 % by mole of terephthalic acid and 8 % by mole of sodium sulfoisophthalate as the dicarboxylic acid components, and 75 % by mole of ethylene glycol and 25 % by mole of diethylene glycol as the glycol components.

Then, the film carrying the applied coating liquid was stretched in the transverse direction at 100 °C at a draw ratio of 3.8 times, and again in the machine direction at 130 °C at a draw ratio of 1.3 times and in the transverse direction at 190 °C at a draw ratio of 1.1 times, followed by heat setting at 230 °C with tentering. The film was then cooled and wound with shrinking the film by 4 % in each of the machine and transverse directions to obtain a laminated biaxially oriented polyethylene terephthalate film, which had a coating layer thickness of 0.06 $\mu$m, a base film thickness of 4.5 $\mu$m, a $F_5$ value of 1.4 x $10^8$ Pa, a Young's modulus in the machine direction of 6.3 x $10^9$ Pa and a Young's modulus in the transverse direction of 6.3 x $10^9$ Pa.

The properties are shown in Table 6. This laminated film had poor skew property and was not practically used.

Table 6

| Exam-ple No. | Coating layer | | Properties | | | | | |
|---|---|---|---|---|---|---|---|---|
| | Binder resin *1) (parts) | Lubricant (parts) | Contact angle of water (deg.) | Adhesion of magnetic layer (g) | Bond-ing (g) | Slipping property ($\mu$d) | Abrasion resistance | Skew |
| 11 | PES 95 | PE 5 | 77 | 75 | 13 | 0.31 | O | O |
| 12 | PES 95 | Silicone 5 | 81 | 63 | 12 | 0.25 | O | O |
| 13 | PU 95 | PE 5 | 79 | 51 | 21 | 0.35 | O | O |
| 14 | PAc 95 | PE 5 | 80 | 40 | 0 | 0.32 | O | O |
| C. 5 | PES 95 | PE 5 | 77 | 76 | 13 | 0.35 | O | X |

Note: *1) PES: Polyester.
PAc: Polyacrylate.
PU: Polyurethaen.
PE: Polyethylene.

## Claims

1. A laminated polyethylene 2,6-naphthalate film comprising a polyethylene 2,6-naphthalate film and a coating layer which is formed on at least one surface of said polyethylene 2,6-naphthalate film and comprises at least one water-soluble or dispersible resin selected from the group consisting of polyesters, polyurethanes and polyacrylic resins, and satisfying the following properties:

(1) an $F_5$ value in a machine direction of at least $1.5 \times 10^8$ Pa,

(2) a Young's modulus in a machine direction of at least $5.9 \times 10^9$ Pa,

(3) a Young's modulus in a transverse direction of at least $5.9 \times 10^9$ Pa, and

(4) A surface roughness Ra of the coating layer of not larger than 0.020 $\mu$m.

2. The laminated polyethylene 2,6-naphthalate film according to claim 1, wherein said coating layer contains a lubrication-improving agent.

3. The laminated polyethylene 2,6-naphthalate film according to claim 2, wherein said lubrication-improving agent comprises organic particles.

4. The laminated polyethylene 2,6-naphthalate film according to claim 3, wherein a content of said organic particles is from 0.5 to 40 % by weight based on the weight of said coating layer.

5. The laminated polyethylene 2,6-naphthalate film according to claim 2, wherein said lubrication-improving agent is a lubricant.

6. The laminated polyethylene 2,6-naphthalate film according to claim 6, wherein a content of said lubricant is from 0.5 to 20 % by weight based on the weight of said coating layer.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 522 507 (DIAFOIL HOECHST CO. LTD.)<br>* claims 1,2,7,10,11,14 *<br>* page 4, line 14 - line 27 *<br>* page 5, line 30 - line 40 *<br>* page 5, line 52 - line 56 *<br>--- | 1-6 | C08J7/04<br>//C08L67:02,<br>G11B5/704 |
| A | DATABASE WPIL<br>Derwent Publications Ltd., London, GB;<br>AN 90-294840[39]<br>& JP-A-2 208 039 (TEIJIN KK.) 8 February<br>1989<br>* abstract *<br>--- | 1 | |
| A | EP-A-0 461 613 (DIAFOIL COMPANY, LTD.)<br>* claims 1-3 *<br>*example 1 and comparative example 4*<br>* table 1 *<br>* page 3, line 34 - line 39 *<br>--- | 1 | |
| A | DATABASE WPIL<br>Derwent Publications Ltd., London, GB;<br>AN 87-075965[11]<br>& JP-A-62 028 918 (TEIJIN KK.) 6 February<br>1987<br>* abstract *<br>--- | 1,2 | TECHNICAL FIELDS SEARCHED (Int. Cl.5 )<br><br>C08J<br>G11B |
| P,A | EP-A-0 504 416 (TEIJIN LTD.)<br>* claims 1-5,9-11 *<br>* page 3, line 47 - line 53 *<br>* page 5, line 58 - line 19 *<br>--- | 1,2 | |
| P,A | EP-A-0 492 648 (DIAFOIL COMPANY, LTD.)<br>* claim 1 *<br>* page 3, line 5 - line 11 *<br>* page 4, line 11 - line 19 *<br>----- | 1 | |

The present search report has been drawn up for all claims

| Place of search | Date of completion of the search | Examiner |
|---|---|---|
| THE HAGUE | 21 JULY 1993 | NIAOUNAKIS M. |